(19) Europäisches Patentamt / European Patent Office / Office européen des brevets

(11) EP 1 660 552 B1

(12) # EUROPÄISCHE PATENTSCHRIFT

(45) Veröffentlichungstag und Bekanntmachung des Hinweises auf die Patenterteilung:
**24.02.2016 Patentblatt 2016/08**

(21) Anmeldenummer: **04764172.5**

(22) Anmeldetag: **16.08.2004**

(51) Int Cl.:
***C08G 18/42*** *(2006.01)* ***C08G 18/73*** *(2006.01)*
***C08G 18/40*** *(2006.01)* ***C08G 18/48*** *(2006.01)*
***C08F 283/00*** *(2006.01)* ***C08G 18/75*** *(2006.01)*

(86) Internationale Anmeldenummer:
**PCT/EP2004/009180**

(87) Internationale Veröffentlichungsnummer:
**WO 2005/028534 (31.03.2005 Gazette 2005/13)**

(54) **AMORPHE POLYESTERURETHAN-NETZWERKE MIT FORM-GEDÄCHTNIS-EIGENSCHAFTEN**

AMORPHOUS POLYESTER URETHANE NETWORKS HAVING SHAPE MEMORY PROPERTIES

RESEAUX POLYESTER URETHANNE AMORPHES PRESENTANT DES CARACTERISTIQUES DE MEMOIRE DE FORME

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.09.2003 DE 10340392**

(43) Veröffentlichungstag der Anmeldung:
**31.05.2006 Patentblatt 2006/22**

(73) Patentinhaber: **Helmholtz-Zentrum Geesthacht Zentrum für Material- und Küstenforschung GmbH**
**21502 Geesthacht (DE)**

(72) Erfinder:
- **LENDLEIN, Andreas**
**14167 Berlin (DE)**
- **ALTEHELD, Armin**
**32657 Lemgo (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**EP-B- 1 027 086 US-A- 5 328 957**

- **STOREY R F ET AL: "HYDROLYZABLE POLY(ESTER-URETHANE)NETWORKS FROM L-LYSINE DIISOCYANATA AND D,L-LACTIDE/EPSILON-CAPROLACTONE HOMO- AND COPOLYESTER TRIOLS" JOURNAL OF POLYMER SCIENCE, POLYMER CHEMISTRY EDITION, JOHN WILEY AND SONS. NEW YORK, US, Bd. 32, Nr. 12, 1. September 1994 (1994-09-01), Seiten 2345-2363, XP000458082 ISSN: 0360-6376**
- **BRUIN P ET AL: "BIODEGRADABLE LYSINE DIISOCYANATE-BASED POLY(GLYCOLIDE-C0-E-CAPROLACT ONE)-URETHANE NETWORK IN ARTIFICIAL SKIN" BIOMATERIALS, ELSEVIER SCIENCE PUBLISHERS BV., BARKING, GB, Bd. 11, Nr. 4, 1. Mai 1990 (1990-05-01), Seiten 291-295, XP000128983 ISSN: 0142-9612**

EP 1 660 552 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft vernetzte, vorzugsweise biodegradierbare Polyesterurethane mit Formgedächtniseigenschaften.

Stand der Technik

Biodegradierbare, kovalente Polymernetzwerke mit Formgedächtniseigenschaften werden zumeist durch freie radikalische Polymerisation von z.B. Makrodimethacrylaten erhalten. Dieses Herstellungsverfahren umfasst insgesamt drei Schritte: Synthese von Makrodiolen, Methacrylierung der Endgruppen, radikalische Vernetzung.

Der radikalische Reaktionsmechanismus unterliegt einem Zufallsprozess, bei dem die mikroskopische Struktur der Vernetzungsstellen nur in geringem Maße gesteuert werden kann, so dass strukturelle Inhomogenitäten in den Netzwerken auftreten können. Weiterhin ist bei einer derartigen Kettenreaktion die Steuerung bzw. Kontrolle der Reaktion schwierig, so dass selbst bei sehr einheitlichen Ausgangsmaterialien im Netzwerk selber stark unterschiedliche Bereiche vorliegen können, z.B. Bereiche mit einer hohen Vernetzungsdichte und Bereiche mit einer geringeren Vernetzungsdichte. Dies beeinträchtigt jedoch in einigen Anwendungsbereichen den Einsatz derartiger Materialien. Gleichzeitig können solche Inhomogenitäten auch zu einer Variabilität der physikalischen Eigenschaften führen.

Brui, Smedinga & Pennings ("Biodegradable lysine diisocyanate-based poly(glycolide-co-ε-caprolactone)-urethane network in artificial skin" Biomaterials 1990, Vol. 11, 291-295) beschreiben ein Präpolymer, das eine sternförmige Zentraleinheit (Myo-Inositol) und sechs daran gebundene, hydroxyterminierte Arme aus Poly(glycolid-co-ε-caprolacton) umfasst. Dieses Präpolymer wird mit 2,6-Diisocyanatoethylhanoat (Lysin-Diisocyanat) vernetzt, um ein Poly[(glycolid-co-ε-caprolacton)]-Urethan-Netzwerk zu erhalten. Das Präpolymer weist ein vergleichsweise geringes Molgewicht und keine Formgedächtniseigenschaften auf.

Storey et al. ("Hydrolyzable poly(ester-urethane)networks from L-lysine diisocyanata and D,L-lactide/ε-caprolactone homo- and copolyester triols" J. Polymer Sci., Polymer Chem. Ed., Bd. 32, Nr. 12, 2345-2363) beschreiben Polyurethan-Netzwerke, die auf Polyestertriolen mit einem mittleren Molgewicht von 1200 bis 3000 g/mol basieren.

Aufgabe der Erfindung

Daher ist es die Aufgabe der vorliegenden Erfindung ein neues Material und ein dazugehöriges Herstellungsverfahren abzugeben, mit denen die Nachteile des Standes der Technik überwunden werden können.

Kurze Beschreibung der Erfindung

Die oben geschilderte Aufgabe wurde durch das Polyurethannetzwerk nach Anspruch 1 gelöst, sowie durch das Verfahren, definiert in Anspruch 10. Bevorzugte Ausführungsformen sind in den Unteransprüchen angegeben.

Detaillierte Beschreibung der Erfindung

Um strukturelle Inhomogenitäten in den Netzwerken zu umgehen, wird in Übereinstimmung mit der vorliegenden Erfindung ein neues System amorpher Polymernetzwerke aus ein oder mehreren Segmenten mit Formgedächtniseigenschaften zur Verfügung gestellt. Die polymeren Netzwerke sind erhältlich durch Umsetzung von hydroxytelechelischen Präpolymeren mit Diisocyanat, wobei die Präpolymere ein Zahlenmittel des Molgewichts von 5000 bis 12000 g/mol aufweisen, Polyester- und/oder Polyethersegmente umfassen und eine sternförmige Zentraleinheit besitzen. Die Netzwerke setzen sich bevorzugt aus bioabbaubaren und biokompatiblen Komponenten zusammen und eröffnen die Möglichkeit für den Einsatz im medizinischen Bereich. Der Systemcharakter der Materialien erlaubt eine gezielte Einstellung der thermischen und mechanischen Eigenschaften sowie des Abbauverhaltens. Die vorliegende Erfindung erlaubt insbesondere die Herstellung mehrphasiger amorpher Netzwerke.

Im Gegensatz zu den bereits entwickelten biodegradierbaren, kovalenten Polymernetzwerken mit Formgedächtniseigenschaften, die durch freie radikalische Polymerisation von z.B. Makrodimethacrylaten erhalten werden, wird in der vorliegenden Erfindung ein anderes Herstellungsverfahren angewendet, nämlich die Polyaddition. Insgesamt sind dabei nur zwei Syntheseschritte notwendig: Synthese von Makrotriolen bzw. -tetrolen und Polyaddition.

Die erfindungsgemäßen Netzwerke basieren auf sternförmigen Präpolymeren mit Hydroxy-Endgruppen, die durch bekannte Verfahren hergestellt werden. Diese Vorgehensweise ermöglicht die Herstellung von strukturell einheitlichen Netzwerken (insbesondere auch in größerem Maßstab). Durch die Herstellung ausgehend von mehrfunktionellen Präpolymeren kann eine sehr große Einheitlichkeit der Netzwerke gesichert werden, da durch die Anzahl der möglichen Kopplungsstellen und die Kettenlänge der Präpolymere die wesentlichen Parameter des Netzwerkes schon durch die vergleichsweise niedermolekularen Ausgangsverbindungen festgelegt werden können, was die Kontrolle vereinfacht.

Gleichzeitig sind die Vernetzungsstellen selbst auch schon vorgeformt, was die Kontrolle weiter erleichtert.

Die erfindungsgemäßen Netzwerke umfassen mehrfunktionelle Bausteine (abgeleitet von den oben genannten Präpolymeren), bevorzugt tri- und/oder tetrafunktionelle Bausteine, die vor der Herstellung des Netzwerks bevorzugt an den reaktiven Enden jeweils eine Hydroxyfunktionalität aufweisen, oder eine äquivalente Gruppierung. Die Netzwerkherstellung erfolgt dann durch Umsetzung mit einem geeigneten Diisocyanat oder einer anderen geeigneten Verbindung, bevorzugt bei einem leichten Überschuss an Diisocyanat.

Die mehrfunktionellen Bausteine (Präpolymere) umfassen eine Zentraleinheit, die den späteren Vernetzungsstellen im Netzwerk entspricht. Diese Zentraleinheit ist bevorzugt abgeleitet von geeigneten niedermolekularen mehrfunktionellen Verbindungen, bevorzugt mit drei oder mehr Hydroxygruppen, insbesondere drei bis fünf und weiter bevorzugt drei oder vier Hydroxygruppen. Geeignete Beispiele sind Pentaerythritol und 1,1,1-tris(Hydroxymethyl)ethan. An diese Zentraleinheit sind eine entsprechende Anzahl an Präpolymerketten gebunden (entsprechend-z.B. der Anzahl an Hydroxygruppen), wobei diese Ketten bevorzugt durch Esterbindungen verbundene Monomereinheiten umfassen und/oder durch Etherbindungen verbundene Monomereinheiten. Bevorzugte Beispiele sind Ketten auf Basis von Milchsäure, Caprolacton, Dioxanon, Glycolsäure und/öder Ethylen- oder Propylenglycol.

Bevorzugt sind hierbei insbesondere Ketten aus Milchsäure (D oder L oder DL), optional in Kombination mit einem der weiteren oben genannten Säurebausteine (als Blockcopolymere oder als statistische Copolymere, wobei statistische Copolymere bevorzugt sind). Alternativ umfassen die Ketten Segmente aus den Säurebausteinen (in den oben genannten möglichen Kombinationen), zusammen mit Segmenten aus den Etherbausteinen, wobei hier eine Kombination mit einem Polypropylenglycolsegment besonders bevorzugt ist. Bevorzugt weisen solche Bausteine in jeder Kette zwei Segmente auf, ein Polyestersegment und ein Polyethersegment (insbesondere Polypropylenglycol), wobei es bevorzugt ist, wenn das Polyethersegment an der Zentraleinheit vorgesehen ist, daran anhängend das Polyestersegment, so dass die Kettenenden durch das Polyestersegment geformt werden.

Die Präpolymere weisen üblicherweise ein Zahlenmittel des Molgewichts (bestimmt durch GPS) von 1000 bis 20000 g/mol auf, bevorzugt 2500 bis 15000 g/mol, insbesondere 5000 bis 12000 g/mol und weiter bevorzugt 8000 bis 11000 g/mol. Bei den Präpolymeren mit Segmenten aus Polyethereinheiten weisen die Segmente aus Polyethereinheiten bevorzugt ein Zahlenmittel des Molgewichts von 1000 bis 6000 auf und die daran gekoppelten Polyestersegmente ein Zahlenmittel des Molgewichts von 1000 bis 12000 g/mol, so dass diese Präpolymere insgesamt wieder ein Zahlenmittel des Molgewichts aufweisen, wie oben beschrieben.

Da derartige Präpolymere durch gut steuerbare Verfahren hergestellt werden können, weisen die erfindungsgemäß eingesetzten Präpolymere bevorzugt eine relativ große Einheitlichkeit (PD) auf, bevorzugt im Bereich von 1 bis 2, insbesondere 1 bis 1,5. Eine derartig gute Einheitlichkeit verleiht auch den erfindungsgemäßen Netzwerken eine gute Einheitlichkeit.

Es ist insbesondere bevorzugt, wenn die Präpolymere Milchsäureeinheiten aufweisen (Lactateinheiten). Sind noch weitere Säurebausteine vorhanden, so machen die Lactateinheiten bevorzugt den Großteil der Säureeinheiten im Polyestersegment aus. Für die anderen oben genannten Säurebausteine sind bevorzugte Anteile, neben Lactateinheiten wie folgt:

Glycolat: 0 bis 55 Massen-%, bevorzugt 10 bis 30 Massen-%
Caprolacton oder Dioxanon: 0 bis 45 Massen-%, bevorzugt 10 bis 25 Massen-%, insbesondere etwa 15 Massen-%

Die jeweiligen Anteile lassen sich einfach durch die Kontrolle der Menge an Monomer bei der Herstellung der Präpolymere einstellen.

Die wie oben beschrieben aufgebauten Präpolymere werden durch eine Polyadditionsreaktion zu den erfindungsgemäßen Netzwerken umgesetzt. Dabei ergibt die Umsetzung mit den Diisocyanaten eine Kettenverknüpfung an den Hydroxygruppen an den Enden der mehrfunktionellen Präpolymere, so dass die Ketten dann durch Diurethaneinheiten verbunden sind. Aufgrund der Hydrolyseempfindlichkeit der einzelnen Segmente ergibt sich so ein Netzwerk, das insbesondere im physiologischen Bereich bioabbaubar sein kann. Die Auswahl der Komponenten für die Präpolymere erlaubt weiterhin insbesondere auch die Herstellung von amorphen Netzwerken. Insbesondere der Einsatz von Milchsäure (bevorzugt DL-Form) und der Einsatz von ataktischem Polypropylenglycol erlaubt die Herstellung von vollständig amorphen Netzwerken.

Dabei kann durch den Anteil der einzelnen Monomere das Abbauverhalten gesteuert werden. Glycolateinheiten, Caprolactoneinheiten und Dioxanoneinheiten verzögern im Allgemeinen die Abbaureaktion.

Durch die Kettenlänge und den jeweiligen Anteil an Monomer kann darüber hinaus auch das mechanische Eigenschaftsprofil des Netzwerks gesteuert werden. Geringe Molmassen der Präpolymere führen üblicherweise zu Netzwerken mit hohen Vernetzungsdichten, die allerdings ggf. geringe mechanische Festigkeiten aufweisen. Dafür ist bei solchen Netzwerken die Quellfähigkeit beschränkt.

Der Einbau von Glycolateinheiten, Caprolactoneinheiten und/oder Dioxanoneinheiten erlaubt weiterhin eine Kontrolle der Übergangstemperatur und damit der Schalttemperatur für den Form-Gedächtnis-Effekt (der Form-Gedächtnis-Effekt ist im Stand der Technik bereits ausführlich beschrieben, in diesem Zusammenhang wird daher lediglich auf die bereits existierende Literatur, z.B. die weiteren Patentanmeldungen der Firma Mnemoscience verwiesen). Dadurch kann gezielt eine für eine Anwendung gewünschte Schalttemperatur eingestellt werden.

Die erfindungsgemäßen Präpolymere erlauben darüber hinaus auch die Herstellung von phasensegregierten Netzwerken, was für einige Anwendungsbereiche von Vorteil ist. Zur Herstellung solcher phasensegregierter Netzwerke bieten sich die folgenden Strategien an.

1. Erfindungsgemäße Präpolymere nur mit Polyestersegmenten werden in der Gegenwart von Polyethermakromonomeren mit ungesättigten Endgruppen mit Diisocyanat umgesetzt. Diese Polyethermakromonomere werden anschließend photochemisch vernetzt, was ein IPN ergibt.
2. Erfindungsgemäße Präpolymere, die sowohl Polyestersegmente als auch Polyethersegmente aufweisen, werden mit Diisocyanat umgesetzt. Es ergibt sich ein Netzwerk mit segregierten Phasen.
3. Erfindungsgemäße Präpolymere nur mit Polyestersegmenten werden mit Präpolymeren nur mit Polyethersegmenten mit Diisocyanat umgesetzt. Es ergibt sich ein Netzwerk mit segregierten Phasen, wobei im Unterschied zu 2. Polyestersegmente und Polyethersegmente nicht in einem Präpolymer vorliegen, sondern in getrennten Präpolymeren, verbunden durch Diurethaneinheiten.
4. Erfindungsgemäße Präpolymere nur mit Polyestersegmenten werden mit Diisocyanat umgesetzt. Das entstandene Netzwerk wird in der Gegenwart von Acrylatmonomeren gequollen und die dadurch eingelagerten Acrylatmonomere werden anschließend photochemisch zu einem Netzwerk vernetzt, was ein IPN ergibt.

Bevorzugte Molgewichte für die Makromonomere (1.) entsprechen den oben angegebenen Werten für das Polyethersegment im Präpolymer. Bevorzugt ist auch hier ein Polypropylenglycolsegment.

Bevorzugte Acrylatmonomere für Option 4. sind Ethylacrylat, Butylacrylat, Hexylacrylat und Hydroxyethylacrylat sowie die entsprechenden Methacrylate. Der Gesamtmassenanteil in den entstehenden IPN für diese Monomere beträgt bevorzugt 1 bis 35 Massen-%, stärker bevorzugt 8 bis 25 Massen-%. Hydroxyethylacrylat erlaubt insbesondere eine Einstellung der Hydrophilie des IPN.

Bevorzugte erfindungsgemäße Netzwerke sind wie folgt:

Typ I: Polymernetzwerke aus Triolen oder Tetrolen und Diisocyanat,

Typ II: Polymernetzwerke aus Triolen und Tetrolen und Diisocyanat,

Typ III: Polymernetzwerke aus Triolen oder Tetrolen mit Diisocyanat und einem interpenetrierenden Netzwerk aus einem Makrodimethacrylat,

Typ IV: Sequentielle interpenetrierende Polymernetzwerke aus einem Netzwerk aus Triolen oder Tetrolen mit Diisocyanat und anschließend polymerisierten niedermolekularen Acrylaten.

Die erfindungsgemäßen Netzwerke lassen sich auf allen Gebieten, wo biokompatible bzw. abbaubare Materialien zum Einsatz kommen können, einsetzen, z.B. im medizinischen Bereich.

Die erfindungsgemäßen Netzwerke können weitere Bestandteile aufweisen, wie Füllstoffe, biologisch aktive Stoffe, Farbstoffe, Diagnostika usw. Der Einsatz solcher zusätzlicher Bestandteile hängt vom jeweiligen Einsatzzweck ab.

<u>Kurze Beschreibung der Figuren</u>

Figur A zeigt die Glastemperatur der Polyurethan-Netzwerke (Typ I) mit Oligo[(*rac*-lactat)-*co*-glykolat Segmenten unterschiedlicher Segmentlängen.

Figur B veranschaulicht das Rückstellverhalten (Formgedächtnis Effekt) eines zuvor gedehnten Netzwerks (Typ I) mit Oligo[(*rac*-lactat)-*co*-glykolat Segmenten im Aufheizprozess.

Figur C zeigt die Glastemperatur der Polyurethan-Netzwerke (Typ I) mit Oligo(lactat-co-hydroxycaproat) bzw. Oligo(lactat-hydroxyethoxyacetat) Segmenten mit variablem Lactat-Gehalt.

Figur D veranschaulicht das Rückstellverhalten (Formgedächtnis Effekt) einiger Polyurethan-Netzwerke (Typ I) aus Figur C im Aufheizprozess.

Figur E stellt die thermischen Eigenschaften der Multiphasen-Polymernetzwerke (Typ I) mit Oligo(propylenglycol) und Oligo(lactat-co-glycolat)-segmenten dar.

Figur F stellt eine schematische Darstellung der Fixierung eines Prä-IPNs durch die nachfolgende Vernetzung der zusätzlichen Komponente dar (Typ III).

Figur G zeigt die Quellbarkeit eines IPNs (Typ IV) in Wasser mit variablem Anteil an 2-(Hydroxyethyl)acrylat.

<u>Herstellung der Netzwerke</u>

Die erfindungsgemäßen Netzwerke können einfach durch Umsetzung der Präpolymere mit Diisocyanat in Lösung, z.B. in Dichloromethan, und anschließender Trocknung erhalten werden (Typ I und II). Bei der Herstellung der IPN mit einem zweiten Netzwerk aus Acrylatmonomeren wird das erfindungsgemäße Netzwerk nach der Herstellung in Monomeren gequollen, worauf sich die Vernetzung der Monomere anschließt (Typ IV). Bei den IPN mit einem zweiten Netzwerk aus Polypropylenglycolmakromonomeren wird das erfindungsgemäße Netzwerk in der Gegenwart der Makromonomere hergestellt (in Lösung, wie oben beschrieben), die dann anschließend vernetzt werden (Typ III). Prinzipiell möglich ist auch eine Massenpolymerisation, d.h. Vernetzungsreaktionen ohne Einsatz eines Lösungsmittels. Diese Option ist insbesondere wertvoll im Hinblick auf eine Verarbeitung der erfindungsgemäßen Materialien im Spritzguss, da dabei die thermoplastischen Ausgangsmaterialien geformt werden, worauf sich die Vernetzung in der gewünschten Form anschließt.

<u>Beispiele</u>

Die folgenden Beispiele illustrieren die vorliegende Erfindung

**Kurzbezeichnungen der Oligomere und der Polymernetzwerke**

*<u>Cooligomere des rac-Dilactids</u>*

X-LY($\mu_Y$)-Z

X Initiator der ringöffnenden Polymerisation
E Ethylenglykol
P Pentaerythrit
T 1,1,1-Tris(hydroxymethyl)ethan
L *rac*-Lactat
Y Comonomereinheiten
C ε-Hydroxycaproat
D β-Hydroxyethoxyacetat
G Glykolat
$\mu$y Massenanteil des Comonomers Y nach $^1$H-NMR bezogen auf die Gesamtmasse der Repetiereinheiten ohne Initiatorsegment in Mass.-%
Z Gemäß der Einwaage der Reaktanden erwartetes Zahlenmittel der Molmasse der Oligomere in g·mol$^{-1}$ gerundet auf 1000 g·mol$^{-1}$

*<u>Oligo(propylenglykol)</u>*

F-PPG-Z

F Endgruppen

D Diol
*M* Dimethacrylat
T Triol

PPG Oligo(propylenglykol)

Z Zahlenmittel der Molmasse der hydroxyfunktionellen Oligomere nach Herstellerangaben in g·mol$^{-1}$; Ausnahme M-PPG-560: hier ist Z das Zahlenmittel der Molmasse des Makrodimethacrylats nach Herstellerangaben in g·mol$^{-1}$

*Stern-{oligo{propylenglykol)-block-oligo[(rac-lactat)-co-glykolat U triale*

T-PPG-Z-*b*-LG-Z

T-PPG Durch Initiierung mit Glycerin dargestelltes, kommerziell erworbenes Oligo(propylenglykol)triol

Z Zahlenmittel der Molmasse des eingesetzten Oligo(propylenglykol)triols nach Herstellerangaben in g·mol$^{-1}$

*b* Blocksequenzstruktur

LG Oligo[(*rac*-lactat)-*co*-glykolat]segment mit 15 Mass.-% Glykolat gemäß Einwaage

Z Gemäß der Einwaage der Reaktanden erwartetes Zahlenmittel der Molmasse des Stern-{oligo(propylenglykol)-*block*-oligo[(*rac*-lactat)-*co*-glykolat]}trials in g·mol$^{-1}$

*Netzwerke (außer interpenetrierende Polymernetzwerke)*

Es gelten die Bezeichnungen der eingesetzten Präpolymere mit dem Präfix N. Eine Ausnahme bilden die Netzwerke, die durch Polyaddition von Mischungen aus Oligo(propylenglykol)triolen, Oligo[(*rac*-lactat)-*co*-glykolat]tetrolen und TMDI dargestellt werden. Hier gelten die folgenden Kurzbezeichnungen:

N-T-PPG($\mu_{PPG}$)-Z-LG

N Netzwerks

T-PPG Durch Initiierung mit Glycerin dargestelltes, kommerziell erworbenes Oligo(propylenglykol)triol

$\mu_{PPG}$ Eingesetzter Massenanteil des Oligo(propylenglykol)triols bezogen auf die Gesamtmasse der Präpolymere in Mass.-%

Z Zahlenmittel der Molmasse des Oligo(propylenglykol)triols nach Herstellerangaben in g·mol$^{-1}$

LG Oligo[(*rac*-lactati-*co*-glykolat]tetrol P-LG(17)-10000

Weitere Ausnahmen bilden die Netzwerke N-EA, N-BA und N-HEA. Hierbei handelt es sich um Netzwerke, die durch photochemisch initiierte Polymerisation von Ethylacrylat, Butylacrylat oder (2-Hydroxyethyl)acrylat erhalten werden. Den Acrylaten wird ein Volumen von 0,5 Vol.-% des Oligo(propylenglykol)dimethacrylats M-PPG-560 und der Photoinitiator 2,2'-Dimethoxy-2-phenylacetophenon (10 mg/mL) zugegeben.

*Interpenetrierende Polymernetzwerke*

N-LG-*ip*X-N-Y($\mu_Y$)-Z

N-LG Netzwerk aus N-P-LG(17)-10000 und TMDI

*ip* Interpenetrierendes Polymernetzwerk

X Anzahl der Schritte, in denen Quellung und Bestrahlung erfolgen (optional); bei X = 1 nicht explizit genannt

N-Y Netzwerk aus Oligo(propylenglykol)dimethacrylat und der Komponente Y:
EA Ethylacrylat
BA Butylacrylat

HEA (2-Hydroxyethyl)acrylat

M-PPG Oligo(propylenglykol)dimethacrylat

$\mu_Y$ Anteil der Komponente Y in Mass.-%; bei *in situ* sequenziellen IPNs gemäß der Einwaage an Oligo(propylenglykol)dimethacrylat

Z Molmasse des bei der Synthese des Makrodimethacrylats eingesetzten Oligo(propylenglykol)diols; bei Verwendung von M-PPG-560 nicht explizit genannt

Bei interpenetrierenden Systemen, deren Komponente Y unvernetzt vorliegt (Prä-IPNs), entfällt der Zusatz N vor dieser Komponente.

Präpolymere (Makrotriole und Makrotetrole)

Die Darstellung sternförmiger Präpolymere wie Oligo[(*rac*-lactat)-*co*-glykolat]triol oder -tetrol erfolgt durch die ringöffnende Copolymerisation von *rac*-Dilactid und Diglykolid in der Schmelze der Monomere mit hydroxyfunktionellen Initiatoren unter Zusatz des Katalysators Dibutylzinn(IV)oxid (DBTO). Dieser Syntheseweg hat sich in der Literatur zur Herstellung von linearen und verzweigten Oligomeren mit definierter Molmasse und Endgruppenfunktionalität als geeignet erwiesen (D. K Han, J. A. Hubbell, Macromolecules 29, 5233 (1996); D. K. Han, J. A Hubbell, Macromolecules 30; 6077 (1997); R. F. Storey, J. S. Wiggins, A. D. Puckett, J. Polym. Sci.: Part A: Polym. Chem. 32, 2345 (1994); S. H. Kim, Y.-K. Han, Y. H. Kim, S. I. Hong, Makromol. Chem. 193, 1623 (1992)). Als Initiatoren der ringöffnenden Polymerisation werden Ethylenglykol, 1,1,1-Tris(hydroxy-methyl)ethan bzw. Pentaerythrit eingesetzt.

Analog werden Oligo(lactat-co-hydroxycaproat)tetrole und Oligo(lactat-hydroxyethoxyacetat)tetrole sowie [Oligo(propylenglycol)-block-oligo(*rac*-lactat)-co-glycolat)]triole hergestellt.

Tab. 1: Zusammensetzung und Molgewicht der Präpolymere Oligo[(*rac*-lactat)-co-glykolat]e.

$\chi_G$ Molarer Anteil an Glycolateinheiten, $\mu_G$ Massenanteil an Glykolateinheiten, zahlenmittlere Molmasse $M_n$ und Polydispersität PD der nach $^1$H-NMR-Spektroskopie ($^1$H-NMR), Dampfdruckosmometrie (VPO) und Gelpermeationschromatographie (GPC). Der eingesetzte Massenanteil an Glykolat im Reaktionsansatz ist $\mu_{G_R}$ und $M_{calc}$ das aufgrund der Einwaage der Reaktanden erwartete Zahlenmittel der Molmasse.

| Oligomer[a)] | $\mu_{G_R}$ | $X_G$[b)] | $\mu_G$[b)] | $M_{calc}$ | $M_n$[b)] ($^1$H-NMR) | $M_n$ (VPO) | $M_n$ (GPC) | PD (GPC) |
|---|---|---|---|---|---|---|---|---|
| | Mass.-% | mol-% | Mass.-% | g·mol$^{-1}$ | g·mol$^{-1}$ | g·mol$^{-1}$ | g·mol$^{-1}$ | |
| E-LG(15)-1000 | 15 | 18 | 15 | 1100 | 1100 | n. b. | 1200 | 1,56 |
| E-LG(17)-2000 | 15 | 20 | 17 | 2100 | 2000 | 1800 | 2300 | 1,63 |
| E-LG(15)-5000 | 15 | 18 | 15 | 5100 | 5000 | n. b.[c)] | 5600 | 1,44 |
| E-LG(17)-7000 | 15 | 20 | 17 | 7100 | 6200 | 4200 | 5400 | 1,67 |
| E-LG(16)-9000 | 15 | 19 | 16 | 9100 | 9500 | 5600 | 7900 | 1,60 |
| E-LG(15)-12000 | 15 | 18 | 15 | 12000 | 12500 | 4400 | 6200 | 1,75 |
| T-LG(17)-1000 | 15 | 20 | 17 | 1100 | 980 | n.b.[c)] | 970 | 1,49 |
| T-LG(IS)-2000 | 15 | 18 | 15 | 2100 | 2300 | 1900 | 2800 | 1,40 |
| T-LG(17)-5000 | 15 | 20 | 17 | 5100 | 4500 | 3100 | 4400 | 1,43 |
| T-LG(17)-7000 | 15 | 20 | 17 | 7100 | 6000 | 4200 | 7200 | 1,41 |
| T-LG(16)-9000 | 15 | 19 | 16 | 9200 | 7900 | 7700 | 9600 | 1,42 |
| T-LG(16)-10000 | 15 | 19 | 16 | 10100 | 9200 | 4700 | 6400 | 1,60 |
| T-LG(18)-12000 | 15 | 21 | 18 | 12200 | 11700 | 6000 | 7600 | 1,64 |
| P-LG(17)-1000 | 15 | 20 | 17 | 1100 | 820 | 1300 | 760 | 1.92 |
| P-LG(18)-2000 | 15 | 21 | 18 | 2100 | 2500 | n.b.[c)] | 5400 | 1,11 |
| P-LG(15)-5000 | 15 | 18 | 15 | 5100 | 4900 | 4000 | 7600 | 1,23 |
| P-LG(15)-7000 | 15 | 18 | 15 | 7100 | 7300 | 4700 | 8000 | 1,30 |
| P-LG(16)-9000 | 15 | 19 | 16 | 9100 | 8200 | 4200 | 6300 | 1,91 |
| P-LG(17)-10000 | 15 | 18 | 17 | 10100 | 10500 | 5100 | 10800 | 1,60 |
| P-LG(12)-10000 | 15 | 15 | 12 | 12100 | 10100 | 8700 | 14400 | 1,24 |
| P-LG(0)-10000 | 0 | 0 | 0 | 10100 | 9200 | 6700 | 11100 | 1,21 |
| P-LG(8)-10000 | 8 | 10 | 8 | 10100 | 11600 | 9200 | 13400 | 1,13 |

(fortgesetzt)

| $\chi_G$ | Molarer Anteil an Glycolateinheiten, $\mu_G$ Massenanteil an Glykolateinheiten, zahlenmittlere Molmasse $M_n$ und Polydispersität PD der nach $^1$H-NMR-Spektroskopie ($^1$H-NMR), Dampfdruckosmometrie (VPO) und Gelpermeationschromatographie (GPC). Der eingesetzte Massenanteil an Glykolat im Reaktionsansatz ist $\mu_{G_R}$ und $M_{calc}$ das aufgrund der Einwaage der Reaktanden erwartete Zahlenmittel der Molmasse. | | | | | | | |
|---|---|---|---|---|---|---|---|---|
| Oligomer[a)] | $\mu_{G_R}$ | $X_G$[b)] | $\mu_G$[b)] | $M_{calc}$ | $M_n$[b)] ($^1$H-NMR) | $M_n$ (VPO) | $M_n$ (GPC) | PD (GPC) |
| | Mass.-% | mol-% | Mass.-% | $g \cdot mol^{-1}$ | $g \cdot mol^{-1}$ | $g \cdot mol^{-1}$ | $g \cdot mol^{-1}$ | |
| P-LG(13)-10000 | 10 | 16 | 13 | 10100 | 10500 | 9700 | 14000 | 1,27 |
| P-LG(30)-10000 | 30 | 35 | 30 | 10100 | 10700 | 7400 | 9200 | 1,41 |
| P-LG(48)-10000 | 50 | 53 | 48 | 10100 | 9700 | 6100 | 10800 | 1,36 |
| P-LG(52)-10000 | 50 | 57 | 52 | 10100 | 9900 | 7800 | 12600 | 1,21 |

a) Erläuterung der Abkürzungen, s.o.
b) Der molare Anteil an Glykolateinheiten $\chi_G$ wird anhand der $^1$H-NMR-Spektren berechnet und in Massenanteile $\mu_G$ umgerechnet. Die Bestimmung der Zusammensetzung der Oligomere und die Berechnung von $M_n$ nach $^1$H-NMR sind in Kap. 12.2.1. beschrieben.
c) n. b.: nicht bestimmt
E = Ethylenglycol
P = Pentaerythrit
T = 1,1,1-Tris(hydroxymethyl)ethan

Tab. 1 a: Molarer $\chi_D$ bzw. Massenanteil $\mu_D$ an β-Hydroxyethoxyacetat, zahlenmittlere Molmasse $M_n$ und Polydispersität PD der Oligo[(*rac*-lactat)-*co*-(β-hydroxyethoxyacetat)]e nach 1H-NMR-Spektroskopie (1H-NMR), Dampfdruckosmometrie (VPO) und Gelpermeationschromatographie (GPC). Der eingesetzte Massenanteil an β-Hydroxyethoxyacetat ist $\mu_{D_R}$ und $M_{calc}$ die aufgrund der Einwaage der Reaktanden gemäß Gl. 4.2 erwartete zahlenmittlere Molmasse. Die Präpolymere werden durch Initiierung mit Pentaerythrit dargestellt.

| Oligomer[a)] | $\mu_{D_R}$ | $\chi_D$[b)] | $\mu_D$[b)] | $M_{calc}$ | $M_n$[b)] ($^1$H-NMR) | $M_n$ (VPO) | $M_n$ (GPC) | PD (GPC) |
|---|---|---|---|---|---|---|---|---|
| | Mass.-% | mol-% | Mass.-% | $g \cdot mol^{-1}$ | $g \cdot mol^{-1}$ | $g \cdot mol^{-1}$ | $g \cdot mol^{-1}$ | |
| P-LD(12)-1000 | 15 | 9 | 12 | 1100 | 980 | 1200 | 1300 | 1,58 |
| P-LD(15)-2000 | 15 | 11 | 15 | 2100 | 2600 | 1800 | 2900 | 1,39 |
| P-LD(13)-5000 | 15 | 10 | 13 | 5200 | 5900 | 3300 | 7100 | 1,32 |
| P-LD(13)-7000 | 15 | 10 | 13 | 7200 | 7300 | 3500 | 8700 | 1,32 |
| P-LD(12)-10000 | 15 | 9 | 12 | 10100 | 9500 | 4100 | 12300 | 1,37 |
| P-LD(8)-10000 | 10 | 6 | 8 | 10100 | 6500 | 3900 | 11200 | 1,26 |
| P-LD(17)-10000 | 20 | 12 | 17 | 10100 | 6300 | 4100 | 12300 | 1,37 |
| P-LD(20)-10000 | 20 | 15 | 20 | 10100 | 7200 | n. b.[c)] | n. b.[c)] | n. b.[c)] |
| P-LD(25)-10000 | 30 | 19 | 25 | 10100 | 6900 | 4400 | 10900 | 1,29 |
| P-LD(45)-10000 | 50 | 37 | 45 | 10100 | 10100 | 3200 | 11100 | 1,25 |
| P-LD(65)-10000 | 70 | 56 | 65 | 10100 | 10000 | 2500 | 9400 | 1,21 |

a) s.o.
b) Der molare Anteil an β-Hydroxyethoxyacetateinheiten $\chi_D$ wird durch Auswertung der $^1$H-NMR-Spektren berechnet und in Massenanteile $\mu_D$ umgerechnet. Die Bestimmung der Zusammensetzung der Oligomere und die Berechnung von $M_n$ nach $^1$H-NMR
c) n. b.: nicht bestimmt

Tab. 2b: Massenanteil $\mu_{PPG}$ an Oligo(propylenglykol), zahlenmittlere Molmasse $M_n$ nach $^1$H-NMR-Spektroskopie ($^1$H-NMR) bzw. Gelpermeationschromatographie (GPC) und Polydispersität PD der Stern-{oligo(propylenglykol)-*block*-oligo[(*rac*-lactat)-*co*-glykolat)}triole und der Makroinitiatoren. $M_{calc}$ ist das Zahlenmittel der Molmasse, das aufgrund der Einwaage der Reaktanden erwartet wird. Die zahlenmittlere Molmasse der Oligo[(*rac*-lactat)-*co*-glykolat]segmente ist $M_{b-LG}$ und der Anteil an umgesetzten Endgruppen der Oligo(propylenglykol)triole $D_P$. Der eingesetzte Massenanteil an Oligo(propylenglykol) im Reaktionsansatz ist $\mu_{PPG-R}$.

| Oligomer[a)] | $\mu_{PPG-R}$ | $\mu_{PPG}$[b)] | $M_{calc}$[c)] | $M_n$[b)] ($^1$H-NMR) | $M_n$ (GPC) | PD (GPC) | $M_{b-LG}$[b)] | $D_P$[b)] |
|---|---|---|---|---|---|---|---|---|
| | Mass.-% | Mass.-% | g·mol$^{-1}$ | g·mol$^{-1}$ | g·mol$^{-1}$ | | g·mol$^{-1}$ | % |
| T-PPG-1000 | 100 | 100 | 1000 | 930 | 1200 | 1,03 | - | 0 |
| T-PPG-1000-*b*-LG-2000 | 50 | 41 | 2000 | 2300 | 2700 | 1,09 | 440 | 95 |
| T-PPG-1000-*b*-LG-4000 | 25 | 22 | 4000 | 4200 | 6000 | 2,35 | 1100 | > 99 |
| T-PPG-1000-*b*-LG-6000 | 17 | 14 | 6000 | 6500 | 6600 | 1,33 | 1900 | > 99 |
| T-PPG-1000-*b*-LG-9000 | 11 | 10 | 9000 | 9000 | 8500 | 1,34 | 2700 | > 99 |
| T-PPG-3000 | 100 | 100 | 3000 | 3400 | 3600 | 1,07 | - | 0 |
| T-PPG-3000-*b*-LG-4000 | 75 | 82 | 4000 | 4200 | 6100 | 1,01 | 250 | 95 |
| T-PPG-3000-*b*-LG-6000 | 50 | 54 | 6000 | 6500 | 11400 | 2,80 | 1000 | 98 |
| T-PPG-3000-*b*LG-9000 | 33 | 38 | 9000 | 9100 | 8700 | 1,41 | 1900 | 92 |
| T-PPG-6000 | 100 | 100 | 6000 | 5600 | 7000 | 1,44 | - | 0 |
| T-PPG-6000-*b*-LG-9000 | 67 | 60 | 9000 | 9300 | 13400 | 1,65 | 1300 | 86 |
| T-PPG-6000-*b*-LG- | 50 | 48 | 12000 | 11700 | 7600 | 2,56 | 2000 | 76 |

a) s.o.
b) Die Bestimmung von $\mu_{PPG}$, $D_P$ und $M_n$ ($^1$H-NMR) erfolgt mittels $^1$H-NMR-Spektroskopie.
c) Den Werten $n_I$ und $M_I$ liegt $M_n$ der Makroinitiatoren nach Herstellerangaben zugrunde. Netzwerke

Die Netzwerksynthese erfolgt durch Polyaddition der sternförmigen Makrotriole und -tetrole mit einem aliphatischen Diisocyanat als bifunktionellem Kupplungsreagenz (Typ I). Dabei wird in Lösungen in Dichloromethan gearbeitet. Als Diisocyanat wird in Standardexperimenten z.B. ein Isomerengemisch aus 2,2,4- und 2,4,4-Trimethylhexan-1,6-diisocyanat (TMDI) eingesetzt. Durch die Verwendung des Isomerengemischs soll eine mögliche Kristallisation von Diurethansegmenten verhindert werden. Geeignet sind auch andere Diisocyanaten.

Alternativ können Mischungen aus verschiedenen Präpolymeren mit einem Diisocyanat umgesetzt werden, z.B. Oligo(*rac*-lactat)-*co*-(glycolat)tetrol mit Oligo(propylenglycol)triol und TMDI (Typ II).

Für Netzwerke des Typs III wird eine andere Synthesestrategie angewandt. Hierbei wird eine Mischung aus einem Tetrol, einem Oligo(propylenglycol)dimethacrylat und TMDI hergestellt. Zuerst reagieren das Tetrol und das TMDI miteinander zu einem ersten Netzwerk (Prä-IPN). Anschließend wird die radikalische Vernetzung des Dimethacrylats durch UV-Bestrahlung initiiert, wodurch ein zweites Netzwerk entsteht (sequentielles IPN). Durch den Einsatz von Prä-IPNs kann die permanente Form der Formgedächtnismaterialien relativ einfach und schnell durch UV-Bestrahlung an spezielle Anforderungen und Geometrien angepasst werden (Figur F).

Eine andere Synthesestrategie besteht darin, dass ein Polyurethan-Netzwerk des Typs I in einem Acrylat aufgequollen wird und anschließend eine radikalische Polymerisation mittels UV-Licht ausgelöst wird. Geeignet sind Ethyl-, Butyl-, Hexyl- oder (2-Hydroxyethyl)acrylat. Hierdurch erhält man IPN des Typs IV. Unabhängig vom eingesetzten Acrylat werden meistens zwei Glasübergange beobachtet. Mit dem Einsatz von 2-(Hydroxyethyl)acrylat ist es möglich, die Hydrophilie des Materials einzustellen (Figur G). Die Bandbreite medizinischer Anwendungen der vorgestellten Materialien wird durch diese Möglichkeit erweitert.

Tab. 2: Gelgehalt G und Quellungsgrad Q in Chloroform sowie Glasübergangstemperatur $T_g$ nach DSC (2. Aufheizvorgang) von Netzwerken aus P-LG(17)-1000 bzw. P-LG(17)-10000 mit verschiedenen Diisocyanaten bzw. Isomerengemischen von Diisocyanaten (Typ I).

| Diisocyanat | Isomere | $M_n$ (Präpolymer) nach $^1$H-NMR | G | Q | $T_g$ |
|---|---|---|---|---|---|
| | - | g·mol$^{-1}$ | Mass.-% | Vol.-% | °C |
| 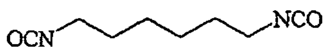 | | 820 | 100 | n. b.[d)] | 59 |
| | | 10500 | 96 ± 1 | 490 ± 0 | 54 |
| 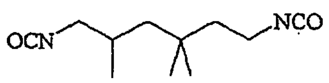 a) | ⊕ | 820 | n. b.[d)] | 160 ± 40 | 66 |
| | | 10500 | 98 ± 2 | 690 ± 70 | 53 |
| 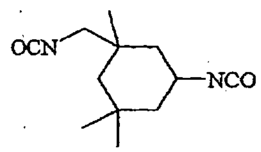 b) | ⊕ | 820 | 100 | n. b.[d)] | 72 |
| | | 10500 | 98 | 470 ± 10 | 57 |
| 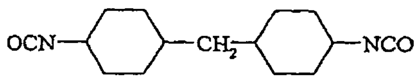 c) | ⊕ | 820 | 99 | n. b.[d)] | 75 |
| | | 10500 | 98 | 460 ± 10 | 57 |
| 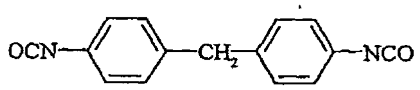 13 | - | 820 | 97 ± 1 | n.b.[d)] | 80 |
| | | 10500 | 100 | 480 | 57 |

a) Isomerengemisch aus 2,2,4- und 2,4,4-Trimethylhexan-l,6-diisocyanat, b) *cis/trans-Gemisch* des Isophorondiisocyanats, c) *cis/trans-Gemisch* des 4,4'-Methylen-bis(cyclohexylisocyanat)s,
d) n. b.: nicht bestimmt. Netzwerke aus P-LG(17)-1000 werden bei Quellung in Chloroform zerstört, daher ist eine Bestimmung von G und Q nur eingeschränkt möglich.

Tab. 2a: Gelgehalt G und theoretische zahlenmittlere Molmasse $M_{c\text{-ideal}}$ der Segmente von Netzwerken aus Oligo[(*rac*-lactat)-*co*-(β-hydroxyethoxyacetat)]tetrolen und TMDI (Typ I). Die Werte für $M_{c\text{-ideal}}$ werden mit der zahlenmittleren Molmasse der Oligomere nach $^1$H-NMR-Spektroskopie berechnet. Die zahlenmittlere Molmasse der freien elastischen Ketten $M_{c\text{-affin}}$ bzw. $M_{c\text{-Phanton}}$ wird anhand der Quellungsgrade Q in Chloroform auf Basis des affinen bzw. des Phantomnetzwerkmodells bestimmt.

| Netzwerk [a)] | G | Q | $M_{c\text{-ideal}}$ | $M_{c\text{-affin}}$ [b)] | $M_{c\text{-Phantom}}$ [b)] |
|---|---|---|---|---|---|
| | Mass.-% | Vol.-% | g·mol$^{-1}$ | g·mol$^{-1}$ | g·mol$^{-1}$ |
| N-P-LD(12)-1000 | 100[c)] | n.b.[d)] | 700 | n.b.[d)] | n.b. [d)] |
| N-P-LD(15)-3000 | 100 | 310 | 1500 | 1700 | 1100 |
| N-P-LD(13)-5000 | 100 | 590 | 3200 | 7200 | 4200 |
| N-P-LD(13)-7000 | 100 | 500 ± 10 | 3900 | 5000 ± 200 | 3000 ± 100 |
| N-P-LD(12)-10000 | 92 ± 1 | 860 ± 50 | 5000 | 15400 ± 1600 | 8700 ± 1000 |
| N-P-LD(8)-10000 | 98 ± 0 | 610 | 3400 | 7600 | 4500 |
| N-P-LD(17)-10000 | 93 ± 1 | 820 ± 10 | 3400 | 14000 ± 300 | 8000 ± 200 |
| N-P-LD(20)-10000 | 97 ± 1 | 560 | 3700 | 6400 | 3800 |
| N-P-LD(25)-10000 | 91 ± 2 | 690 ± 30 | 3800 | 9900 ± 900 | 5700 ± 500 |
| N-P-LD(45)-10000 | 93 ± 1 | 760 ± 30 | 5300 | 12000 ± 1000 | 6900 ± 500 |

(fortgesetzt)

| Netzwerk a) | G | Q | $M_{c\text{-}ideal}$ | $M_{c\text{-}affin}$ b) | $M_{c\text{-}Phantom}$ b) |
|---|---|---|---|---|---|
| | Mass.-% | Vol.-% | $g \cdot mol^{-1}$ | $g \cdot mol^{-1}$ | $g \cdot mol^{-1}$ |
| N-P-LD(65)-10000 | 90 | 870 ± 80 | 5200 | 15800 ± 2900 | 8900 ± 1600 |

a) s.o.
b) Der Löslichkeitsparameter $\delta_P$ wird nur unwesentlich durch den Gehalt an β-Hydroxyethoxyacetat beeinflusst. Für PPDO wird gemäß der Gruppenbeitragsmethode mit molaren Anziehungskonstanten nach *Small* ein Wert von 19,0 $MPa^{0,5}$ ermittelt, der dem Wert für PDLLA entspricht. Alle Berechnungen erfolgen daher mit einem Wert für den Wechselwirkungsparameter X von 0,34. Die Dichte der amorphen Netzwerke $\rho_P$ wird stets gleich 1,215 $g \cdot cm^{-3}$ gesetzt
c) Die Bestimmung von G erfolgt durch Extraktion mit einem Gemisch aus Diethylether und Chloroform in einem Volumenverhältnis von etwa 1:1.
d) n. b.: nicht bestimmt. Netzwerke werden bei Quellung in Chloroform zerstört.

Tab. 3b: Gelgehalt G und massenbezogener Quellungsgrad S in Chloroform von Netzwerken aus Stern-{oligo(propylenglykol)-*block*-oligo[(*rac*-lactat)-co-glykolat]}triolen und TMDI (Typ I).

| Netzwerk a) | G | S |
|---|---|---|
| | Mass.-% | Mass.-% |
| N-T-PPG-1000 | 97 ± 2 | n.b. b) |
| N-T-PPG-1000-*b*-LG-2000 | 97 ± 2 | 350 ± 10 |
| N-T-PPG-1000-*b*-LG-4000 | 93 ± 4 | 870 ± 60 |
| N-T-PPG-1000-*b*-LG-6000 | 94 ± 0 | 960 ± 10 |
| N-T-PPG-1000-*b*-LG-9000 | 90 ± 1 | 1390 ± 130 |
| N-T-PPG-3000 | 98 ± 1 | 700 ± 10 |
| N-T-PPG-3000-*b*-LG-4000 | 94 ± 1 | 1330 ± 400 |
| N-T-PPG-3000-*b*-LG-6000 | 73 | 3670 |
| N-T-PPG-3000-*b*-LG-9000 | 58 | 3650 ± 780 |

a) s.o.
b) n. b.: nicht bestimmt, wird bei Quellen in Chloroform zerstört

Tab. 2c: Gelgehalt G und massenbezogener Quellüngsgrad S in Chloroform, Massenanteil $\mu_{PPG\text{-}R}$ an Oligo(propylenglykol) im Reaktionsansatz und mittels $^1H$-NMR-Spektroskopie ermittelter Massenanteil $\mu_{PPG}$ in Netzwerken aus P-LG(17)-10000, Oligo(propylenglykol)triolen variierender Molmasse und TMDI (Typ II). <

| Netzwerks a) | $\mu_{PPG\text{-}R}$ | $\mu_{PPG}$ b) | G | S |
|---|---|---|---|---|
| | Mass.-% | Mass.-% | Mass.-% | Mass.-% |
| N-P-LG(17)-10000 | | | 98 ± 2 | 830 ± 80 |
| N-T-PPG(10)-1000-LG | 10 | n. b. c) | 98 ± 8 | 680 ± 70 |
| N-T-PPG(20)-1000-LG | 20 | 10 | 91 ± 1 | 740 ± 20 |
| N-T-PPG(30)-1000-LG | 30 | 28 | 94 ± 1 | 720 ± 30 |
| N-T-PPG(50)-1000-LG | 50 | 39 | 94 ± 7 | 830 ± 130 |
| N-T-PPG(70)-1000-LG | 70 | 68 | 79 ± 3 | 1750 ± 70 |
| N-T-PPG-1000 | 100 | n.b. c) | 97 ± 2 | n.b. c) |
| N-T-PPG(10)-3000-LG | 10 | n.b. c) | 96 ± 8 | 810 ± 40 |
| N-T-PPG(20)-3000-LG | 20 | 16 | 92 ± 1 | 770 ± 40 |
| N-T-PPG(30)-3000-LG | 20 | 10 | 91 ± 1 | 740 ± 20 |
| N-P-LG(17)-10000 | 30 | 28 | 94 ± 1 | 720 ± 30 |

(fortgesetzt)

| Netzwerks a) | $\mu_{PPG-R}$ | $\mu_{PPG}$ b) | G | S |
|---|---|---|---|---|
| | Mass.-% | Mass.-% | Mass.-% | Mass.-% |
| PPG(50)-3000-LG | 50 | 57 | 90 ± 12 | 1340 ± 90 |
| PPG(70)-3000-LG | 70 | n.b.c) | 67 | 2640 |
| PPG-3000 | 100 | n.b.c) | 98 ± 1 | 700 ± 10 |

a) s.o.
b) Bestimmt mittels $^1$H-NMR-spektroskopischer Untersuchungen nach Umsetzung der erhaltenen Netzwerke mit deuterierter Trifluoressigsäure).
c) n. b.: nicht bestimmt

Tab. 2d: Massenbezogener Quellungsgrad S in Chloroform und Massenanteil $\mu_{PPG-R}$ an Oligo(propylenglykol) im Reaktionsansatz von interpenetrierenden Polymernetzwerken aus P-LG(17)-10000, TMDI und M-PPG-560. Zum Vergleich wird zudem der massenbezogene Quellungsgrad des Netzwerks N-P-LG(17)-10000 gezeigt (Typ III).

| IPNa) | $\mu_{PPG-R}$ | Sb) |
|---|---|---|
| | Mass.-% | Mass.-% |
| N-P-LG(17)-10000 | 0 | 830 ± 80 |
| N-LG-*ip*-N-M-PPG(10) | 10 | 690 ± 190 |
| N-LG-*ip*-N-M-PPG(20) | 20 | 630 ± 30 |
| N-LG-*ip*-N-M-PPG(30) | 30 | 640 ± 40 |
| N-LG-*ip*-N-M-PPG(50) | 50 | 540 ± 20 |

a) s.o.
b) IPNs brechen während der Quellung.

Tab. 2e: Mechanische Eigenschaften von Netzwerksystemen bei 25 °C, die durch Kupplung von Oligo[(*rac*-lactat)-*co*-glykolat]tetrolen mit TMDI und Oligo(propylenglykol)dimethacrylaten vor und nach erfolgter UV-Bestrahlung erhalten werden. E ist der E-Modul, $\sigma_s$ die Streckspannung, $\varepsilon_s$ die Streckgrenze, $\sigma_b$ die Bruchspannung und $\varepsilon_b$ die Bruchdehnung.

| Netzwerka) | E | $\sigma_s$ | $\varepsilon_s$ | $\sigma_b$ | $\varepsilon_b$ |
|---|---|---|---|---|---|
| | MPa | MPa | % | MPa | % |
| N-P-LG(17)-10000 | 340 ± 60 | 40,0 ± 5,0 | 8 ± 3 | 36,2 ± 5,9 | 250 ± 210 |
| N-LG-*ip*-M-PPG(10) | 115 ± 40 | 17,1 ± 3,2 | 24 ± 8 | 15,1 ± 3,2 | 370 ± 115 |
| N-LG-*ip*-M=PPG(20) | 20 ± 3 | | | 11,5 ± 3,4 | 660 ± 200 |
| N-LG-*ip*-M-PPG(30) | 15 ± 10 | | | 8,4 ± 1,3 | 635 ± 115 |
| N-LG-*ip*-M-PPG(50) | 1,5 ± 0,3 | | | 2,2 ± 0,2 | 500 ± 125 |
| N-LG-*ip*-N-M-PPG(10) | 350 ± 10 | 35,4 ± 1,7 | 13 ± 3 | 27,5 ± 3,2 | 260 ± 110 |
| N-LG-*ip*-N-M-PPG(20) | 415 ± 90 | 39,3 ± 1,3 | 10 ± 2 | 36,2 ± 2,9 | 230 ± 20 |
| N-LG-*ip*-N-M-PPG(30) | 270 ± 80 | 32,4 ± 3,5 | 17 ± 2 | 33,3 ± 6,8 | 225 ± 45 |
| N-LG-*ip*-N-M-PPG(50) | 150 ± 30 | 23,2 ± 4,6 | 24 ± 3 | 28,1 ± 3,5 | 105 ± 20 |

(fortgesetzt)

| Netzwerk a) | E | $\sigma_s$ | $\varepsilon_s$ | $\sigma_b$ | $\varepsilon_b$ |
|---|---|---|---|---|---|
| | MPa | MPa | % | MPa | % |
| N-M-PPG-560 | 22 ± 7 | | | 3,1 ± 1,0 | 15 ± 5 |
| a) s.o. | | | | | |

Tab 3: Glasübergangstemperaturen $T_{g1}$ und $T_{g2}$ (DSC, 2. Aufheizvorgang bei einer Heizrate von 30 $K \cdot min^{-1}$) und Änderungen der isobaren Wärmekapazität $\Delta C_{p1}$ und $\Delta C_{p2}$ an den Glasübergängen von IPNs, die durch Quellung des Netzwerks N-P-LG(17)-10000 in Acrylatlösungen und anschließende Bestrahlung dargestellt werden (Typ IV). Zum Vergleich sind die thermischen Eigenschaften der Netzwerke N-EA, N-BA und N-HEA aufgeführt.

| Netzwerk·) | $T_{g1}$ | $\Delta C_{p1}$ | $T_{g2}$ | $\Delta C_{p2}$ |
|---|---|---|---|---|
| | °C | $J \cdot K^{-1} \cdot g^{-1}$ | °C | $J \cdot K^{-1} \cdot g^{-1}$ |
| N-P-LG(17)-10000 | - b) | - b) | 61 | 0,50 |
| N-LG-*ip*-N-EA(15) | - b) | - b) | 56 | 0,34 |
| N-LG-*ip*-N-EA(19) | - b) | - b) | 56 | 0,39 |
| N-LG-*ip*-N-EA(38) | 0 | 0,02 | 56 | 0,16 |
| N-LG-*ip*-N-EA(55) | 1 | 0,12 | 45 | 0,04 |
| N-EA | -7 | 0,40 | - b) | - b) |
| N-L.G-*ip*-N-BA(8) | - b) | - b) | 62 | 0,39 |
| N-LG-*ip*-N-BA(14) | - b) | - b) | 58 | 0,35 |
| *N-LG-ip-N-BA*(19) | - b) | - b) | 57 | 0,37 |
| N-LG-*ip*-N-BA(36) | -43 | 0,08 | 57 | 0,21 |
| N-LG-*ip3*-N-BA(81) | -36 | 0,49 | 57 | 0,07 |
| N-BA | -38 | 0,61 | - b) | - b) |
| N-LG-*ip*-N-HEA(30) | -4 | 0,10 | 51 | 0,31 |
| N-LG-*ip*-N-HEA(50) | -2 | 0,06 | 51 | 0,15 |
| N-LG-ip-N-HEA(59) | 2 | 0,11 | 51 | 0,13 |
| N-LG-*ip*-N-HEA(61) | 9 | 0,04 | 53 | 0,09 |
| N-HEA | -1 | 0,31 | - b) | - b) |

a) s.o. Bei dem Netzwerksystem N-LG-*ip2*-N-BA(56) wird kein thermischer Übergang detektiert.
b) Es wird kein zweiter Glasübergang detektiert.

Form-Gedächtnis Eigenschaften

Tab. 4: Dehnungsfixierungs- $R_f(N)$, Dehnungsrückstellungsverhältnis $R_r(N)$ und E-Modul E(.N) (70 °C) im Zyklus N von Netzwerken aus Oligo[(*rac*-lactat)-*co*-glykolat]triolen bzw. -tetrolen mit konstantem Glykolatgehalt und TMDI bei der angefahrenen Dehnung $\varepsilon_m$ im lagegeregelten, zyklischen thermomechanischen Experiment unter Standardbedingung.

| Netzwerk a) | $\varepsilon_m$ | $R_f(1)$ | $R_r(1)$ | $R_f(2\text{-}5)$ | $R_r(2\text{-}5)$ | E(1) | E(2-5) |
|---|---|---|---|---|---|---|---|
| | % | % | % | % | % | MPa | MPa |
| N-T-LG(17)-5000 | 50 b) | 91,3 | 98,5 | 94,6 ± 2,7 | 98,6 ± 0,9 | 2,04 | 1,68 ± 0,25 |
| N-T-LG(17)-7000 | 100 | 94,3 | > 99 | 94,3 ± 0,1 | 99,3 ± 0,4 | 1,00 | 0,71 ± 0,13 |
| N-T-LG(16)-9000 | 100 | 95,5 | > 99 | 91,2 ± 0,3 | 98,8 ± 0,5 | 0,89 | 0,69 ± 0,02 |
| N-T-LG(18)-12000 | 100 | 91,8 | 97,3 | 91,7 ± 0,1 | 96,9 ± 0,4 | 0,70 | 0,35 ± 0,10 |
| N-P-LG(15)-5000 | 50 b) | 90,3 | > 99 | 91,1 ± 2,4 | 96,4 ± 1,3 | 1,68 | 1,75 ± 0,12 |

(fortgesetzt)

| Netzwerk[a)] | $\varepsilon_m$ | $R_f(1)$ | $R_r(1)$ | $R_f(2-5)$ | $R_r(2-5)$ | E(1) | E(2-5) |
|---|---|---|---|---|---|---|---|
| | % | % | % | % | % | MPa | MPa |
| N-P-LG(15)-7000 | 100 | 92,0 | > 99 | 92,3 ± 0,1 | > 99 | 1,63 | 1,60 ± 0,03 |
| N-P-LG(16)-9000 | 100 | 95,8 | > 99 | 96,8 ± 2,1 | 98,6 ± 1,6 | 0,53 | 0,52 ± 0,01 |
| N-P-LG(17)-10000 | 100 | 96,5 | 92,6 | 95,0 ± 0,0 | 90,1 ± 0,9 | 2,03 | 1,70 ± 0,12 |
| N-P-LG(12)-12000 | 100 | 92,8 | 94,8 | 94,6 ± 2,7 | 90,9 ± 3,5 | 1,18 | 0,78 ± 0,11 |

a) s.o.
b) Die Proben brechen bei einem Wert für $\varepsilon_m$ von 100%.

Die erfindungsgemäßen Beispiele demonstrieren, dass die Netzwerke der Erfindung Form-Gedächtnis-Materialien sind, die gezielt hergestellt werden können, wobei eine gute Kontrolle der Eigenschaften der Netzwerke möglich ist. Bevorzugte Netzwerke sind amorph und bioabbaubar und/oder phasensegregiert.

**Patentansprüche**

1. Polymeres Netzwerk, erhältlich durch Umsetzung von hydroxytelechelischen Präpolymeren mit Diisocyanat, wobei die Präpolymere ein Zahlenmittel des Molgewichts von 5000 bis 12000 g/mol aufweisen, Polyester- und/oder Polyethersegmente umfassen und eine sternförmige Zentraleinheit besitzen.

2. Polymeres Netzwerk nach Anspruch 1, wobei die Präpolymere Einheiten aufweisen, abgeleitet von Milchsäure, Caprolacton, Dioxanon, Glycolsäure, Ethylenglycol und/oder Propylenglycol.

3. Polymeres Netzwerk nach einem der vorstehenden Ansprüche, umfassend ein zweites Netzwerk, das mit dem polymeren Netzwerk nicht kovalent verbunden ist sondern dieses nur durchdringt (IPN), wobei das zweite Netzwerk ein Netzwerk ist, abgeleitet von Acrylatmonomeren oder Polypropylenglycolmakromonomeren.

4. Polymeres Netzwerk nach einem der vorstehenden Ansprüche, wobei das Präpolymer Einheiten umfasst, abgeleitet von Milchsäure und Glycolsäure, Milchsäure und Caprolacton, Milchsäure und Dioxanon oder Milchsäure und Propylenglycol.

5. Polymeres Netzwerk nach Anspruch 4, wobei das Präpolymer Einheiten umfasst, abgeleitet von Milchsäure und Propylenglycol und wobei diese Einheiten in blockartiger Verteilung vorliegen.

6. Polymeres Netzwerk nach einem der vorstehenden Ansprüche, wobei das Präpolymer eine Zentraleinheit aufweist, abgeleitet von einer tri- oder tetrafunktionellen Verbindung.

7. Polymeres Netzwerk nach Anspruch 6, wobei die tri- oder tetrafunktionelle Verbindung 1,1,1-Tris(hydroxymethyl)ethan oder Pentaerythritol ist.

8. Polymeres Netzwerk nach einem der vorstehenden Ansprüche, erhältlich durch Umsetzung von zwei oder drei unterschiedlichen Präpolymeren.

9. Verfahren zur Herstellung eines polymeren Netzwerks nach einem der Ansprüche 1 bis 8, umfassend die Umsetzung von hydroxytelechelischen Präpolymeren mit Diisocyanat, wobei die Präpolymere ein Zahlenmittel des Molgewichts von 5000 bis 12000 g/mol aufweisen, Polyester- und/oder Polyethersegmente umfassen und eine sternförmige Zentraleinheit besitzen.

10. Verfahren nach Anspruch 9, wobei die Präpolymere Einheiten aufweisen, abgeleitet von Milchsäure, Caprolacton, Dioxanon, Glycolsäure, Ethylenglycol und/oder Propylenglycol.

11. Verfahren nach Anspruch 9 oder 10, wobei die Präpolymere ein Zahlenmittel des Molgewichts von 8000 bis 11000 g/mol aufweisen.

**12.** Verfahren nach einem der vorstehenden Ansprüche 9 bis 11, umfassend eine weitere Stufe der Herstellung eines zweiten Netzwerks, das mit dem polymeren Netzwerk nicht kovalent verbunden ist, sondern dieses nur durchdringt (IPN), wobei das zweite Netzwerk ein Netzwerk ist, erhalten durch die Polymerisation von Acrylatmonomeren oder Polypropylenglycolmakromonomeren.

**13.** Verfahren nach einem der vorstehenden Ansprüche 9 bis 12, wobei das Präpolymer Einheiten umfasst, abgeleitet von Milchsäure und Glycolsäure, Milchsäure und Caprolacton, Milchsäure und Dioxanon oder Milchsäure und Propylenglycol.

**14.** Verfahren nach Anspruch 13, wobei das Präpolymer Einheiten umfasst, abgeleitet von Milchsäure und Propylenglycol und wobei diese Einheiten in blockartiger Verteilung vorliegen.

**15.** Verfahren nach einem der vorstehenden Ansprüche 9 bis 14, wobei das Präpolymer eine Zentraleinheit aufweist, abgeleitet von einer tri- oder tetrafunktionellen Verbindung.

**16.** Verfahren nach Anspruch 15, wobei die tri- oder tetrafunktionelle Verbindung 1,1,1-Tris(hydroxymethyl)ethan oder Pentaerythritol ist.

**17.** Verfahren nach einem der vorstehenden Ansprüche 9 bis 16, umfassend die Umsetzung von zwei oder drei unterschiedlichen Präpolymeren.

**Claims**

**1.** A polymeric network, obtainable by reacting hydroxy-telechelic prepolymers with diisocyanate, wherein the prepolymers have a number average molecular weight of 5000 to 12000 g/mol, comprise polyester and/or polyether segments and have a star-shaped central unit.

**2.** The polymeric network according to Claim 1, wherein the prepolymers have units derived from lactic acid, caprolactone, dioxanone, glycolic acid, ethylene glycol and/or propylene glycol.

**3.** The polymeric network according to any one of the preceding claims, comprising a second network which is not covalently bonded to the polymeric network but only penetrates it (IPN), wherein the second network is a network derived from acrylate monomers or polypropylene glycol macromonomers.

**4.** The polymeric network according to any one of the preceding claims, wherein the prepolymer comprises units derived from lactic acid and glycolic acid, lactic acid and caprolactone, lactic acid and dioxanone, or lactic acid and propylene glycol.

**5.** The polymeric network according to Claim 4, wherein the prepolymer comprises units derived from lactic acid and propylene glycol, and wherein these units are distributed blockwise.

**6.** The polymeric network according to any one of the preceding claims, wherein the prepolymer has a central unit derived from a trifunctional or tetrafunctional compound.

**7.** The polymeric network according to Claim 6, wherein the trifunctional or tetrafunctional compound is 1,1,1-tris(hydroxymethyl)ethane or pentaerythritol.

**8.** The polymeric network according to any one of the preceding claims, obtainable by reacting two or three different prepolymers.

**9.** A method for producing a polymeric network according to any one of Claims 1 to 8, comprising the reaction of hydroxy-telechelic prepolymers with diisocyanate, wherein the prepolymers have a number average molecular weight of 5000 to 12000 g/mol, comprise polyester and/or polyether segments and have a star-shaped central unit.

**10.** The method according to Claim 9, wherein the prepolymers have units derived from lactic acid, caprolactone, dioxanone, glycolic acid, ethylene glycol and/or propylene glycol.

11. The method according to Claim 9 or 10, wherein the prepolymers have a number average molecular weight of 8000 to 11000 g/mol.

12. The method according to any one of the preceding Claims 9 to 11, comprising a further stage of producing a second network which is not covalently bonded to the polymeric network but only penetrates it (IPN), wherein the second network is a network obtained by polymerization of acrylate monomers or polypropylene glycol macromonomers.

13. The method according to any one of the preceding Claims 9 to 12, wherein the prepolymer comprises units derived from lactic acid and glycolic acid, lactic acid and caprolactone, lactic acid and dioxanone, or lactic acid and propylene glycol.

14. The method according to Claim 13, wherein the prepolymer comprises units derived from lactic acid and propylene glycol, and wherein these units are distributed blockwise.

15. The method according to any one of the preceding Claims 9 to 14, wherein the prepolymer has a central unit derived from a trifunctional or tetrafunctional compound.

16. The method according to Claim 15, wherein the trifunctional or tetrafunctional compound is 1,1,1-tris(hydroxymethyl)ethane or pentaerythritol.

17. The method according to any one of the preceding Claims 9 to 16, comprising the reaction of two or three different prepolymers.

**Revendications**

1. Réseau polymère, pouvant être obtenu par réaction de prépolymères hydroxytéléchéliques avec diisocyanate, les prépolymères présentant une masse molaire en nombre de 5 000 à 12 000 g/mol, comprenant des segments polyester et/ou polyéther et possédant une unité centrale en forme d'étoile.

2. Réseau polymère selon la revendication 1, les prépolymères présentant des unités dérivées de l'acide lactique, du caprolactone, du dioxanone, de l'acide glycolique, de l'éthylène-glycol et/ou du propylène-glycol.

3. Réseau polymère selon l'une des revendications précédentes, comprenant un deuxième réseau, lequel n'est pas lié de façon covalente au réseau polymère, mais le traverse seulement (réseau polymère interpénétré), le deuxième réseau étant un réseau dérivé de monomères acrylates ou de macromonomères de polypropylène-glycol.

4. Réseau polymère selon l'une des revendications précédentes, le prépolymère comprenant des unités dérivées de l'acide lactique et de l'acide glycolique, de l'acide lactique et du caprolactone, de l'acide lactique et du dioxanone ou de l'acide lactique et du propylène-glycol.

5. Réseau polymère selon la revendication 4, le prépolymère comprenant des unités dérivées de l'acide lactique et du propylène-glycole et ces unités étant réparties par blocs.

6. Réseau polymère selon l'une des revendications précédentes, le prépolymère présentant une unité centrale dérivée d'un composé trifonctionnel ou tétrafonctionnel.

7. Réseau polymère selon la revendication 6, le composé trifonctionnel ou tétrafonctionnel étant du 1,1,1-tris(hydroxyméthyl)éthane ou du pentaérythritol.

8. Réseau polymère selon l'une des revendications précédentes, pouvant être obtenu par réaction de deux ou trois prépolymères différents.

9. Procédé pour la fabrication d'un réseau polymère selon l'une des revendications 1 à 8, comprenant la réaction de prépolymères hydroxytéléchéliques avec diisocyanate, les prépolymères présentant une masse molaire en nombre de 5 000 à 12 000 g/mol, comprenant des segments polyester et/ou polyéther et possédant une unité centrale en forme d'étoile.

**10.** Procédé selon la revendication 9, les prépolymères présentant des unités dérivées de l'acide lactique, du caprolactone, du dioxanone, de l'acide glycolique, de l'éthylène-glycol et/ou du propylène-glycol.

**11.** Procédé selon la revendication 9 ou 10, les prépolymères présentant une masse molaire en nombre de 8 000 à 11 000 g/mol.

**12.** Procédé selon l'une des revendications précédentes 9 à 11, comprenant une étape supplémentaire de fabrication d'un deuxième réseau, lequel n'est pas lié de façon covalente au réseau polymère, mais le traverse seulement (réseau polymère interpénétré), le deuxième réseau étant un réseau obtenu par polymérisation de monomères acrylates ou de macromonomères de polypropylène-glycol.

**13.** Procédé selon l'une des revendications précédentes 9 à 12, le prépolymère comprenant des unités dérivées de l'acide lactique et de l'acide glycolique, de l'acide lactique et du caprolactone, de l'acide lactique et du dioxanone ou de l'acide lactique et du propylène-glycol.

**14.** Procédé selon la revendication 13, le prépolymère comprenant des unités dérivées de l'acide lactique et du propylène-glycole et ces unités étant réparties par blocs.

**15.** Procédé selon l'une des revendications précédentes 9 à 14, le prépolymère présentant une unité centrale dérivée d'un composé trifonctionnel ou tétrafonctionnel.

**16.** Procédé selon la revendication 15, le composé trifonctionnel ou tétrafonctionnel étant du 1,1,1-tris(hydroxyméthyl)éthane ou du pentaérythritol.

**17.** Procédé selon l'une des revendications précédentes 9 à 16, comprenant la décomposition de deux ou trois prépolymères différents.

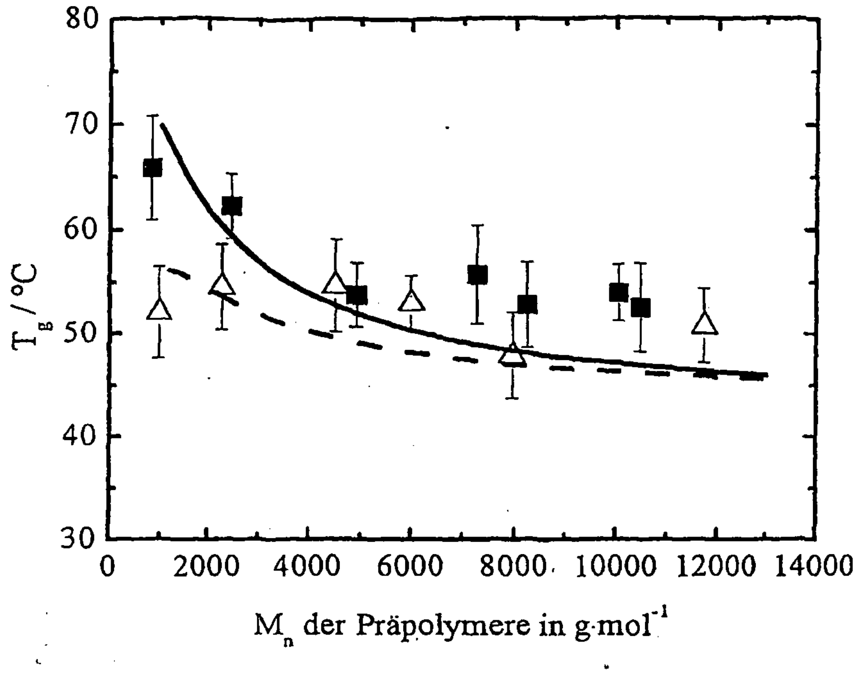


Figur A: Glasübergangstemperatur $T_g$ (DSC, 2. Aufheizvorgang) der Netzwerke aus Oligo[(*rac*-lactat)-*co*-glykolat]triolen (▲) bzw. –tetrolen (■) gekuppelt mit TMDI (Typ I) in Abhängigkeit von $M_n$ der Oligomere mit konstantem Anteil an Glykolat. Zudem sind die gemäß Gl. 4.14 berechneten Werte für $T_g$ in Abhängigkeit von $M_n$ der Makrotriole (---) und –tetrole (-) dargestellt. Die Werte für $T_g^{\infty}$ und $K_o$ (Tab. 4.4) und für $\rho_x$ gemäß Gl. 4.15 mit $M_n$ der Präpolymere nach $^1$H-NMR werden zugrunde gelegt. Die Bestimmung von $K_x$ erfolgt durch eine Regressionsanalyse der experimentellen Werte. Die Balken geben die Breite des Temperaturintervalls am Glasübergang an.

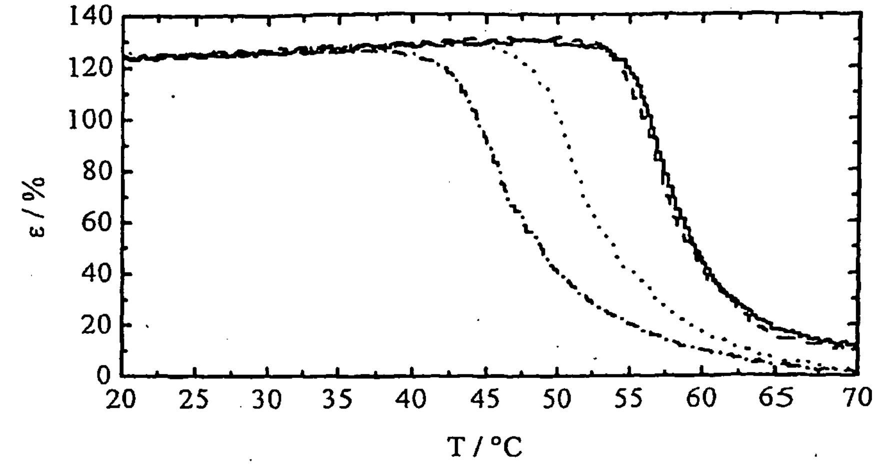


Figur B: b) a) Verlauf der Dehnung ε von Netzwerken aus Makrotetrolen mit variierendem Glykolatgehalt (Typ I) im Aufheizprozess der lagegeregelten, zyklischen thermomechanischen Zug-Dehnungsmessungen in Abhängigkeit von der Temperatur T. (-) N-P-LG(0)-10000, (—) N-P-LG(17)-10000, (...) N-P-LG(30)-10000, (-.-) N-P-LG(52)-10000.

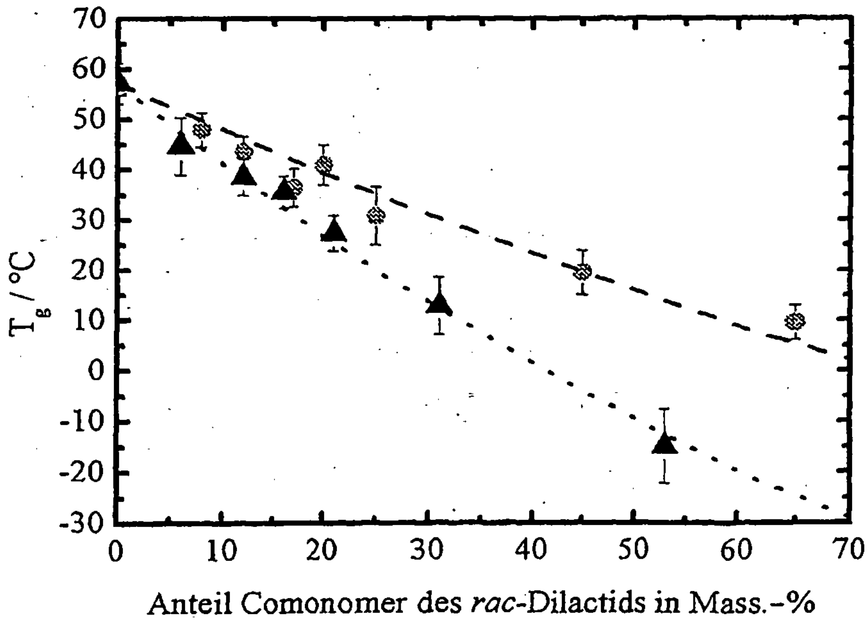


Figur C: Glasübergangstemperatur $T_g$ der Netzwerke aus Makrotetrolen und TMDI (Typ I) nach DSC (2. Aufheizvorgang) in Abhängigkeit vom Massenanteil an β-Hydroxyethoxyacetat (O) bzw. ε-Hydroxycaproat (▲) der Präpolymere ($M_{calc}$ = 10100 g·mol$^{-1}$) und berechnete Werte für $T_g$ in Abhängigkeit vom Comonomerverhältnis (... bzw. —) gemäß einer nicht linearen Regressionsanalyse nach Gl. 4.9. Die Balken geben die Breite des Temperaturintervalls des Glasübergangs an.

a)

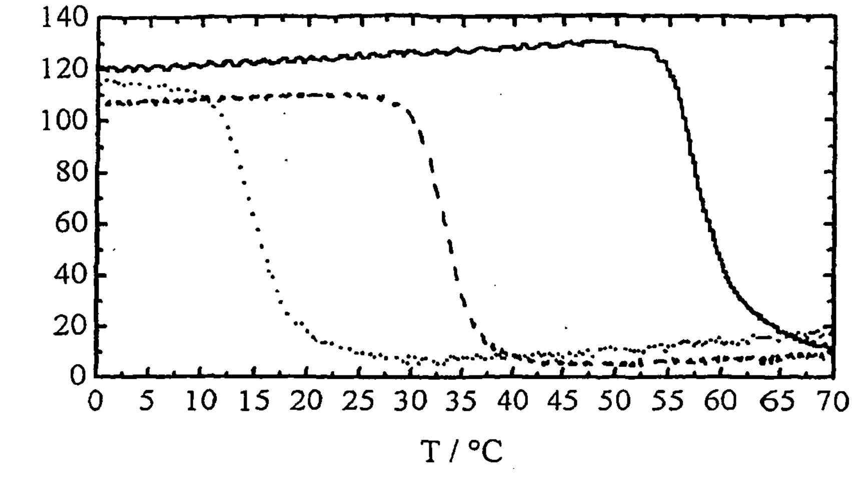


Figur D: a) Dehnung ε in Abhängigkeit von der Temperatur T der Netzwerke aus Makrotetrolen mit variierendem ε-Hydroxycaproatgehalt ($M_{calc}$ = 10100 g·mol$^{-1}$) und TMDI (typ I) im Rückstellungsprozess der spannungsgeregelten, zyklischen thermomechanischen Zug-Dehnungsexperimente.

(-) N-P-LG(0)-10000, (---) N-P-LC(16)-10000, (...) N-P-LC(31)-10000.

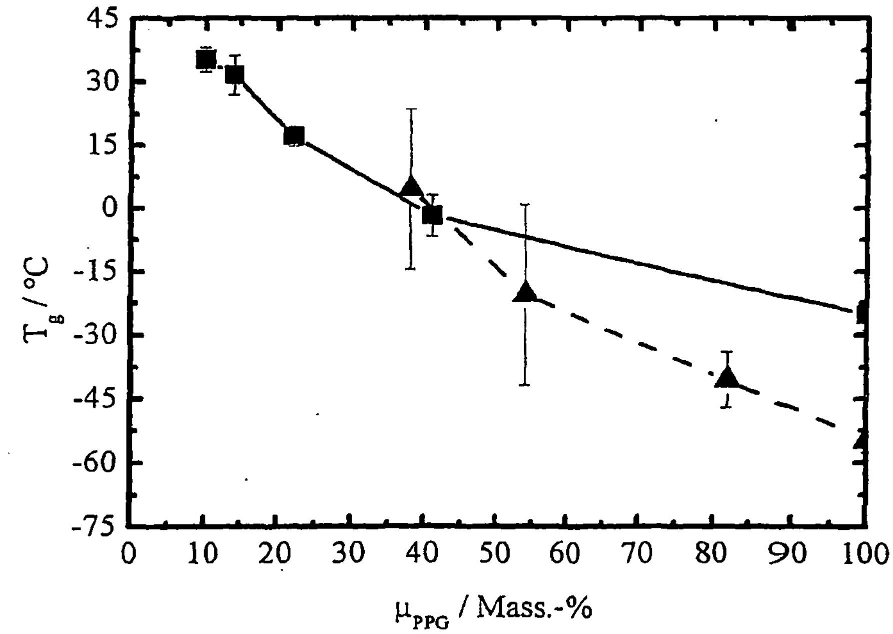


Figur E: Glasübergangstemperatur $T_g$ (DSC, 2. Aufheizvorgang) von Netzwerken aus Stern-{oligo(propylenglykol)-*block*-oligo[(*rac*-lactat)-*co*-glykolat]}triolen und TMDI (Typ I) in Abhängigkeit vom Massenanteil an Oligo(propylenglykol) $\mu_{PPG}$ der Präpolymere nach $^1$H-NMR-Spektroskopie. Die Balken geben die Breite des

Temperaturintervalls des Glasübergangs an. Makroinitiator: -■- T-PPG-1000 bzw. -▲- T-PPG-3000.

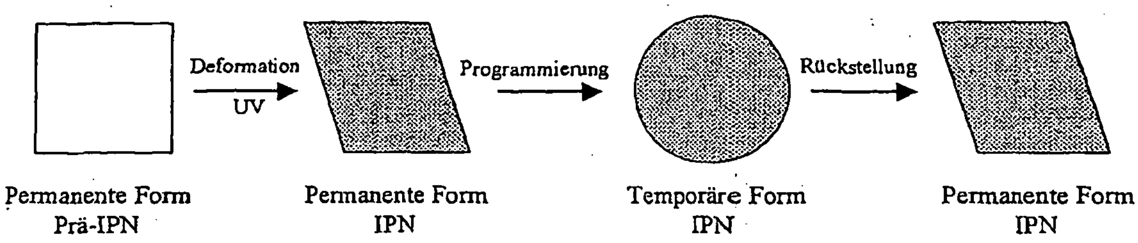


Figur F: Schematische Darstellung der Fixierung eines Prä-IPNs in der permanenten Form für das resultierende IPN (Typ III) und des Formgedächtniseffekts des IPNs.

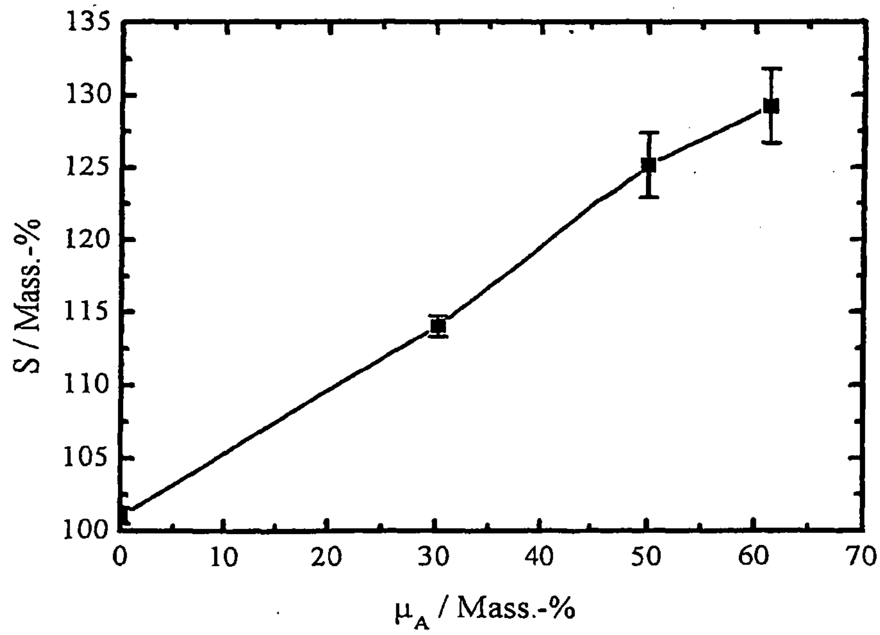


Figur G: Massenbezogener Quellungsgrad S in Wasser von IPNs, die durch Quellung des Netzwerks N-P-LG(17)-10000 in Hydroxyethylacrylatlösung und anschließende UV-Bestrahlung erhalten werden (Typ IV) in Abhängigkeit vom Massenanteil $\mu_A$ der Poly(acrylat)komponente im IPN.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **BRUI ; SMEDINGA ; PENNINGS.** Biodegradable lysine diisocyanate-based poly(glycolide-co-ε-caprolactone)-urethane network in artificial skin. *Biomaterials,* 1990, vol. 11, 291-295
- **STOREY et al.** Hydrolyzable poly(ester-urethane)networks from L-lysine diisocyanata and D,L-lactide/ε-caprolactone homo- and copolyester triols. *J. Polymer Sci., Polymer Chem. Ed.,* vol. 32 (12), 2345-2363
- **D. K HAN ; J. A. HUBBELL.** *Macromolecules,* 1996, vol. 29, 5233
- **D. K. HAN ; J. A HUBBELL.** *Macromolecules,* 1997, vol. 30, 6077
- **R. F. STOREY ; J. S. WIGGINS ; A. D. PUCKETT.** *J. Polym. Sci.: Part A: Polym. Chem.,* 1994, vol. 32, 2345
- **S. H. KIM ; Y.-K. HAN ; Y. H. KIM ; S. I. HONG.** *Makromol. Chem.,* 1992, vol. 193, 1623